# EUROPEAN PATENT APPLICATION

(11) **EP 1 901 542 A1**
(43) Date of publication of application: **19.03.2008**
(21) Application number: 07253296.3
(22) Date of filing: 21.08.2007
(51) Int. Cl.: H04N 1/00

(54) **Method for generating metadata and electronic device having metadata delivery function**

(30) Priority: 21.08.2006 JP 2006224519; 03.08.2007 JP 2007203178
(71) Applicant: Ricoh Company, Ltd., Tokyo 143-8555 (JP)
(72) Inventor: Hinohara, Hiroshi, Kawasaki-shi, Kanagawa (JP)
(74) Representative: Mounteney, Simon James

(57) **Abstract**

A method for generating metadata, the metadata being described in a document language. The method includes a step of obtaining contents from a contents holding part, the contents including an image being a subject of the metadata; a step of analyzing a request for metadata delivery from an opponent for delivery via a network; a step of determining necessity for adding a user interface to a designated operation based on a result of analysis of the request for the metadata delivery; and a step of adding data to the metadata delivered to a requester via a network in a case where it is determined that adding the user interface to the designated operation is necessary, the data being for generating the user interface for the designated operation.

## Description

### BACKGROUND OF THE INVENTION

### 1. Field of the Invention

The present invention generally relates to methods for generating metadata and electronic devices having metadata delivery functions. More specifically, the present invention relates to a method for generating metadata at a device having a function for delivering metadata described in document languages such as RSS (RDF (Resource Description Framework) Site Summary, Rich Site Summary, Really Simple Syndication).

### 2. Description of the Related Art

Recently, a technique using an RSS has attracted a great deal of attention. For example, a FAX device or the like having a function for delivering a FAX receiving history by the RSS has been provided (See Japanese Laid-Open Patent Application Publication No. 2006-54732).

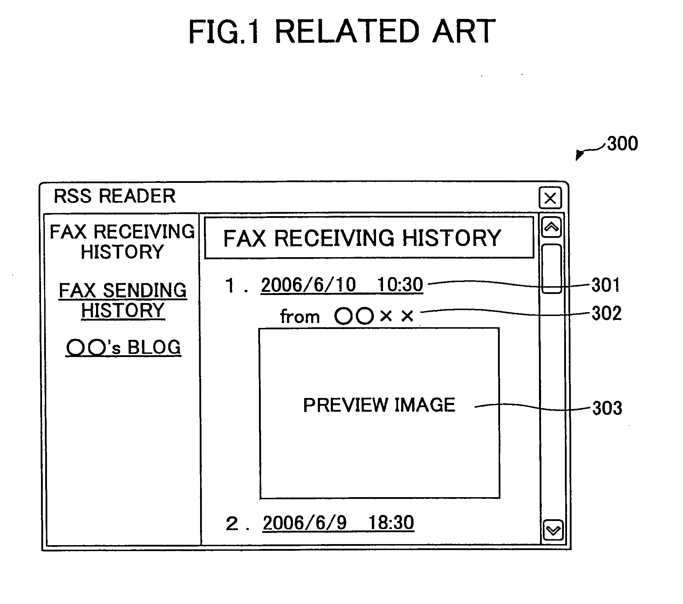

FIG. 1 is a view showing a display example in a case where an RSS obtained from a related art FAX (facsimile) device having an RSS. delivery function is browsed by an RSS reader.

As shown in FIG. 1, information, such as a receiving date and time 301, a sender 302, and a preview image 303 is displayed for every received item on an RSS reader display 300 of a client such as a PC (Personal Computer).

As discussed above, since the FAX receiving history can be easily confirmed from a remote client in the FAX device having the RSS delivery function, it is possible to improve convenience. However, only the FAX receiving history can be confirmed from the RSS reader. Accordingly, in order to output (print out) or forward a FAX received image, it is necessary to separately access a Web system for FAX management or the like and therefore operations are complex.

### SUMMARY OF THE INVENTION

Accordingly, embodiments of the present invention may provide a novel and useful method for generating metadata and an electronic device having a metadata delivery function solving one or more of the problems discussed above.

More specifically, the embodiments of the present invention may provide a method for generating metadata, the metadata indicating a UI (User Interface) for ordering operations of output, forwarding, response, and others from a normal RSS reader or the like, and an electronic device having a metadata delivery function.

One aspect of the present invention may be to provide a method for generating metadata, the metadata being described in a document language, the method including:
a step of obtaining contents from a contents holding part, the contents including an image being a subject of the metadata;
a step of analyzing a request for metadata delivery from an opponent for delivery via a network;
a step of determining necessity for adding a user interface to a designated operation based on a result of analysis of the request for the metadata delivery; and
a step of adding data to the metadata delivered to a requester via a network in a case where it is determined that adding the user interface to the designated operation is necessary, the data being for generating the user interface for the designated operation.

Another aspect of the present invention may be to provide an electronic device having a metadata delivery function, the function being for generating and delivering metadata described in a document language, the electronic device including:
a part configured to obtain contents from a contents holding part, the contents including an image being a subject of the metadata;
a part configured to analyze a request for metadata delivery from an opponent for delivery via a network;
a part configured to determine necessity for adding a user interface to a designated operation based on a result of analysis of the request for the metadata delivery; and
a part configured to add data to the metadata delivered to a requester via a network in a case where it is determined that adding the user interface to the designated operation is necessary, the data being for generating the user interface for the designated operation.

Other objects, features, and advantages of the present invention will be come more apparent from the following detailed description when read in conjunction with the accompanying drawings.

### BRIEF DESCRIPTION OF THE DRAWINGS

FIG. 1 is a view showing a display example in a case where an RSS obtained from a related art FAX (facsimile) device having an RSS delivery function is browsed by an RSS reader;
FIG. 2 is a view showing a structural example of a system including a FAX (facsimile) device having an RSS delivery function where the present invention is applied;
FIG. 3 is a view showing a structural example of the FAX (facsimile) device having the RSS delivery function where the present invention is applied;
FIG. 4 is a view showing a structural example of a client;
FIG. 5 is a timing chart showing a process example of the system;
FIG. 6 is a flowchart showing a process example of generation of Feed having an UI;
FIG. 7 is a view showing an example of requests for obtaining the RSS, client lists, and response;
FIG. 8 is a first view showing an example of an RSS having the UI;
FIG. 9 is a second view showing an example of an RSS having the UI;
FIG. 10 is a third view showing an example of an RSS having the UI;
FIG. 11 is a flowchart showing a process example of UI display;
FIG. 12 is a first view showing display examples of an RSS reader by RSS feed having the UI;
FIG. 13 is a view showing an example of request and response made from selection of an output button to selection of an OK button;
FIG. 14 is a view showing an example of request and response made from selection of a forwarding button to selection of the OK button;
FIG. 15 is a view showing an example of request and response made from selection of a reply button to selection of the OK button;
FIG. 16 is a second view showing display examples of an RSS reader by RSS feed having the UI;
FIG. 17 is a third view showing display examples of an RSS reader by RSS feed having the UI;
FIG. 18 is a view showing a structural example of another embodiment using an RSS delivery aggregation device;
FIG. 19 is a view showing structural examples of the RSS delivery aggregation device 4 and the FAX device; and
FIG. 20 is view showing a structural example of another embodiment using the RSS delivery aggregation device.

### DETAILED DESCRIPTION OF THE PREFERED EMBODIMENTS

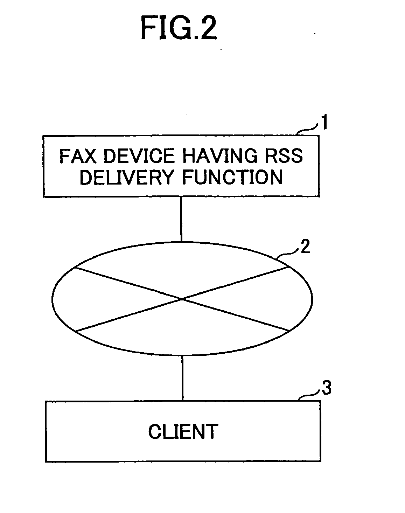

A description of embodiments of the present invention is given below, with reference to the FIG. 2 through FIG. 20.

FIG. 2 is a view showing a structural example of a system including a FAX (facsimile) device having an RSS delivery function where the present invention is applied.

As shown in FIG. 2, a FAX device 1 having the RSS delivery function is connected to a network 2. A client 3 such as a PC is connected to the network 2 operated by a user. The client 3 includes a general purpose RSS reader that is a processing system interpreting and indicating an RSS being metadata.

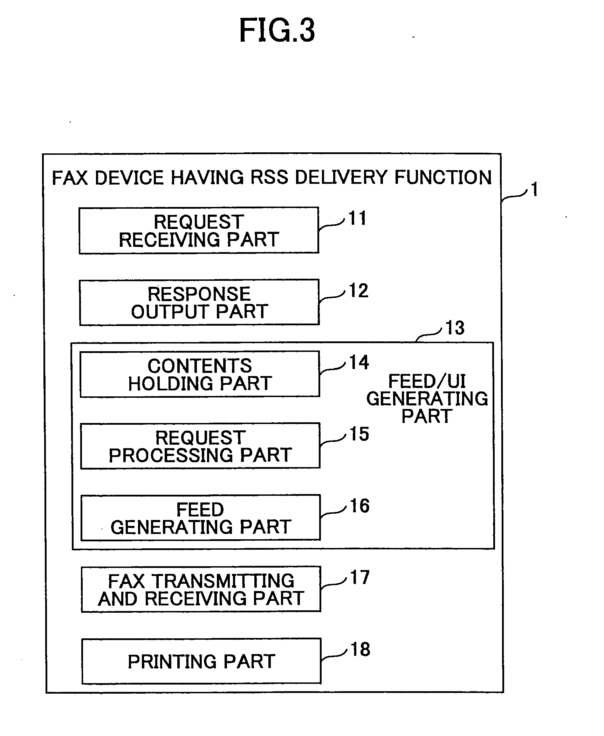

FIG. 3 is a view showing a structural example of the FAX device 1 having the RSS delivery function where the present invention is applied.

As shown in FIG. 3, the FAX device 1 having the RSS delivery function includes a request receiving part 11, a response output part 12, a Feed/UI generating part 13, a FAX transmitting and receiving part 17, and a printing part 18.

The request receiving part 11 is configured to receive a request (HTTP: Hyper Text Transfer Protocol) from the client 3 via the network 2. The response output part 12 is configured to output a response to the request, namely the request by the HTTP. The Feed/UI generating part 13 is configured to generate an RSS feed including the UI corresponding to the client 3 requesting to obtain the RSS. The FAX transmitting and receiving part 17 is configured to transmit and receive FAX data to and from another FAX device or the like. The printing part 18 is configured to print a FAX received image.

The Feed/UI generating part 13 includes a contents holding part 14, a request processing part 15, and a Feed generating part 16. The contents holding part 14 is configured to hold contents of FAX transmitting and receiving history such as a transmitted and received FAX images, a sender, address, transmitting and receiving date and time, and FAX image ID. The request processing part 15 is configured to process the request from the client 3. The Feed generating part 16 is configured to generate an RSS feed.

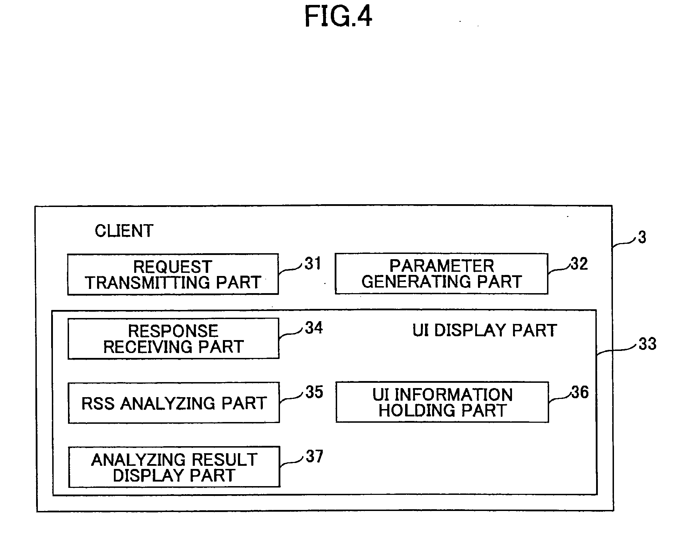

FIG. 4 is a view showing a structural example of the client 3.

As shown in FIG. 3, the client includes a request transmitting part 31, a parameter generating part 32, and a UI display part 33.

The request transmitting part 31 is configured to transmit the request for obtaining the RSS to the FAX device 1 having the RSS delivery function via the network 2. The parameter generating part 32 is configured to generate a parameter, such as "to", "id" or "user", necessary for the process. The UI display part 33 is configured to display the UI.

The UI display part 33 includes a response receiving part 34, an RSS analyzing part 35, a UI information holding part 36, and an analyzing result display part 37.

The response receiving part 34 is configured to receive the response from the FAX device 1 having the RSS delivery function via the network 2. The RSS analyzing part 35 is configured to analyze the RSS included in the response. The UI information holding part 36 is configured to hold UI information such as a tag name, process contents or UI components. The analyzing result display part 37 is configured to display the UI corresponding to the result of analysis of the RSS.

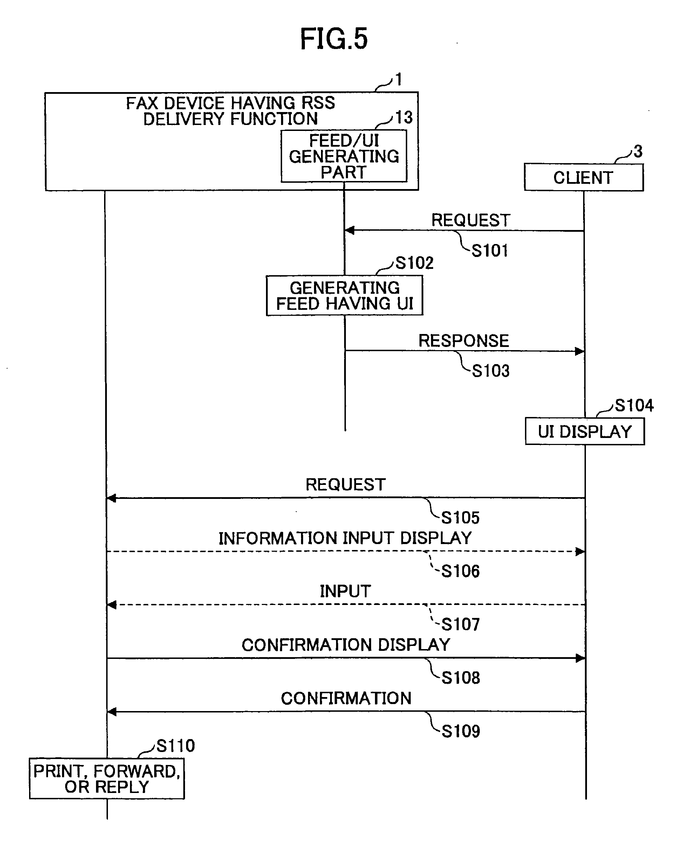

FIG. 5 is a timing chart showing a process example of the system.

As shown in FIG. 5, a request for obtaining the RSS is transmitted to the FAX device 1 having the RSS delivery function from the client 3 in step S101. The Feed/UI generating part 13 of the FAX device 1 having the RSS delivery function generates the Feed having the UI in step S102 so as to transmit it to the client 3 as a response in step S103.

At the client 3, the UI display is made based on the UI included in the RSS of the response in step S104.

By the client 3 operating the UI, the request is transmitted to the FAX device 1 having the RSS delivery function in step S105. In step S106, if necessary, data of an information input display are transmitted from the FAX device 1 having the RSS delivery function to the client 3. The client 3 transmits data being input corresponding to this to the FAX device 1 having the RSS delivery function in step S107.

Finally, data of a confirmation display are transmitted from the FAX device 1 having the RSS delivery function to the client 3 in step S108. The client 3 confirms this and transmits data of confirmation to the FAX device 1 having the RSS delivery function in step S109.

Thus, the FAX device 1 having the RSS delivery function performs a process of printing (outputting), forwarding, or replying corresponding to operations of the UI by the client 3 in step S110.

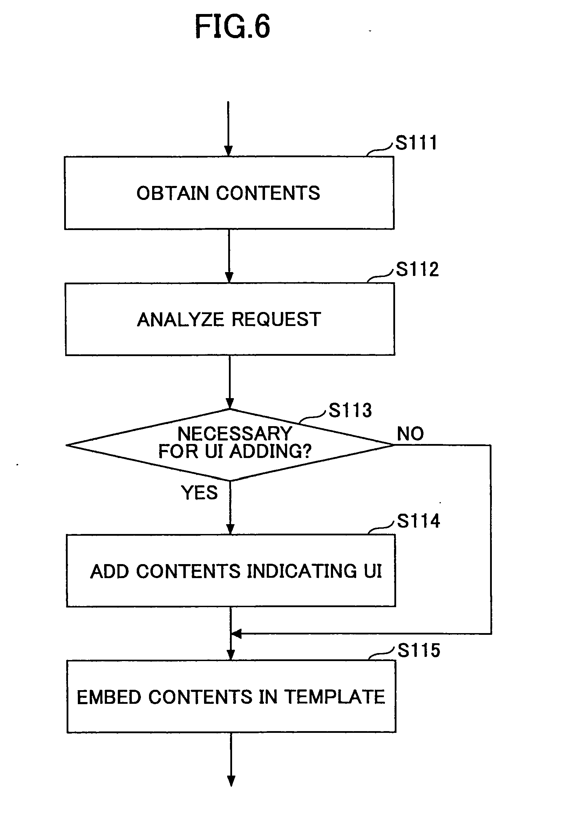

FIG. 6 is a flowchart showing a process example of generation of Feed having the UI in the FAX device 1 having the RSS delivery function.

As shown in FIG. 6, when the request receiving part 11 receives the request for obtaining the RSS from the client 3, the Feed/UI generating part 13 of the FAX device 1 having the RSS delivery function obtains corresponding contents from the contents holding part 14 in step S111. For example, the Feed/UI generating part 13 obtains the transmitting and receiving FAX image, the sender, the address, the transmitting and receiving date and time, the FAX image ID, and others.

Next, the request from the client 3 is analyzed by the request processing part 15 in step S112.

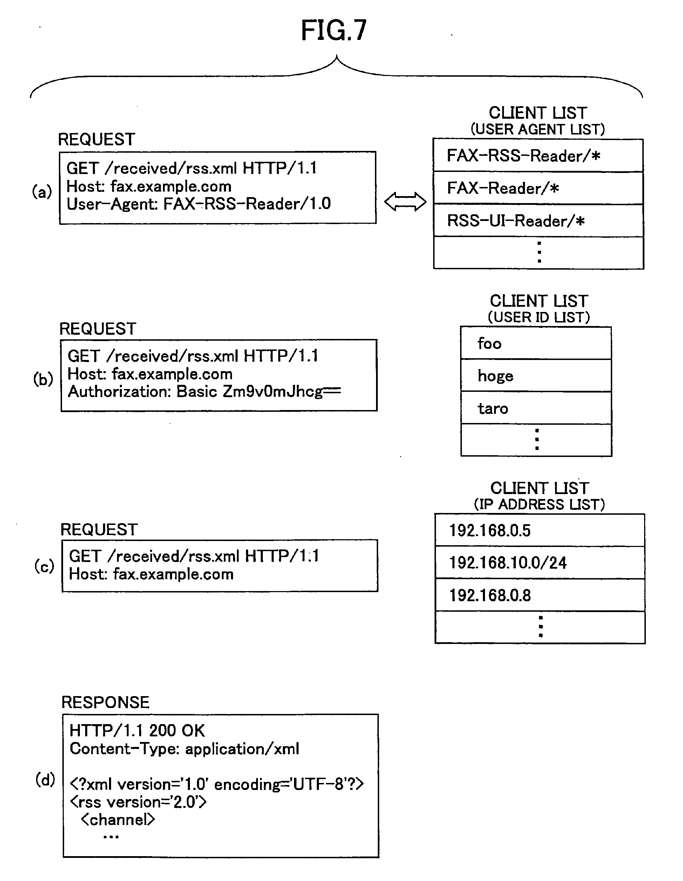

FIG. 7 is a view showing an example of requests for obtaining the RSS, client lists, and response. Examples of requests (requests for obtaining the RSS by a GET method to host "fax.example.com" are indicated at left sides of FIG. 7(a) through FIG. 7(d). The request processing part 51 extracts a command "GET/received/rss.xml HTTP/1.1", a host name "Host: fax.example.com", additional information "User-Agent:FAX-RSS-Reader/1.0", "Authorization: Basic Zm9vOmJhcg==", and a requester IP (Internet Protocol" address or the like included in the request.

"Zm9vOmJhcg==" of "Authorization: Basic Zm9vOmJhcg==" indicates a character string converted by an encoding method called Base 64. The request processing part 15 also decoded for analyzing. In this case, "Zm9vOmJhcg==" is converted to "foo : bar". "foo" indicates a user name and "bar" indicates a password.

Referring back to FIG. 6, the Feed/UI generating part 13 determines the necessity of UI adding from request contents (type of the RSS to be requested, type of client, user ID, IP address of client, or the like) in step S113.

For determination of necessity of UI adding, a client list where information of a client requiring the UI adding is registered in advance is used.

In a case where "User-Agent" indicating a type of a client is included in the request as additional information as shown in FIG. 7(a), by using the client list where the user-agent of the client requiring the UI adding is registered in advance, it is determined that the UI adding will be necessary if the user-agent of the client extracted from the request is registered in the client list.

In a case where "FAX-RSS-Reader/1.0" is extracted as the user agent, it is determined that the UI adding is necessary because "FAX-RSS-Reader/*" is registered in the client list. Here, "*" represents a wild card.

As shown in FIG. 7(b), in a case where "Authorization" indicating the user ID of the client is included in the request as the additional information, the client list where the user ID of the client requiring the UI adding is registered in advance is used. If the authorization (decoded authorization of it is encoded) of the client extracted from the request is registered in the client list, it is determined that the UI adding be necessary. If "foo: bar" is extracted as the authorization, since "foo" is registered in the client list, it is determined that the UI adding is necessary.

As shown in FIG. 7(c), in a case where the additional information is not included in the request, the client list where the user ID of the client requiring the UI adding is registered in advance is used. If the IP address of the client extracted from the request is registered in the client list, it is determined that the UI adding be necessary.

"/24" at "192.168.10.0/24" is an IP address having a common high order 24 bits based on CIDER (Classless Inter-Domain Routing) and indicates address blocks of "192.168.10.1" through "192.168.10.255". If "192.168.10.10" is extracted as the IP address, since it is included in "192.168.10.0/24" registered in the client list, it is determined that the UI adding be necessary.

Referring back to FIG. 6, in a case where the UI adding is necessary, namely "YES" in step S113, contents indicating the UI, namely a module for UI display, the module being described in HTML (Hyper Text Markup Language), is added in step S114. In a case where the UI adding is not necessary, namely "NO" in step S113, contents-adding is not performed.

The contents are embedded in the template for the RSS feed so that generation of the Feed having the UI is completed in step S115.

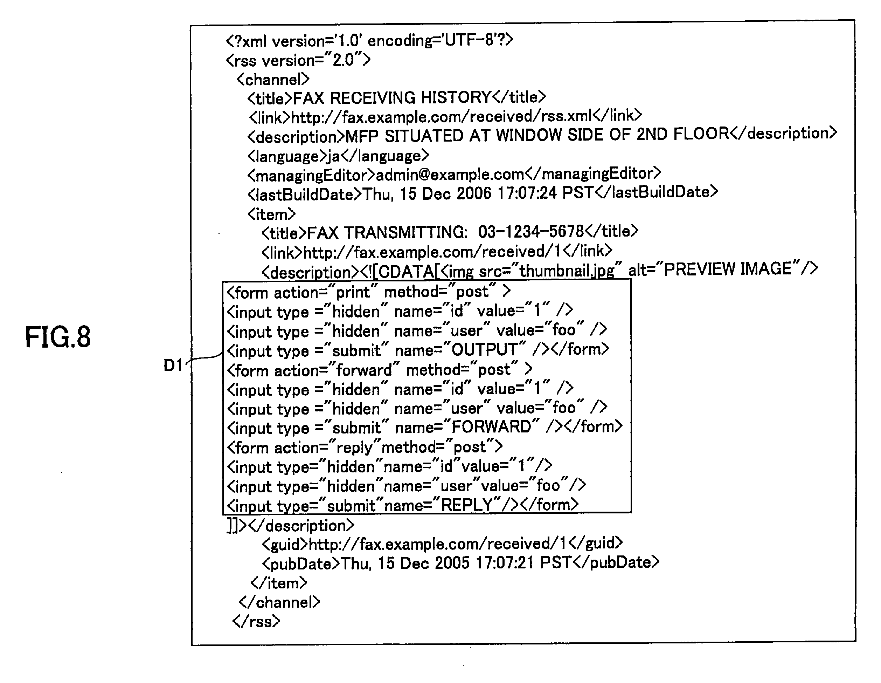

FIG. 8 through FIG. 10 are first through third views showing examples of the RSS having the UI and are described in an XML (extensible Markup Language) format.

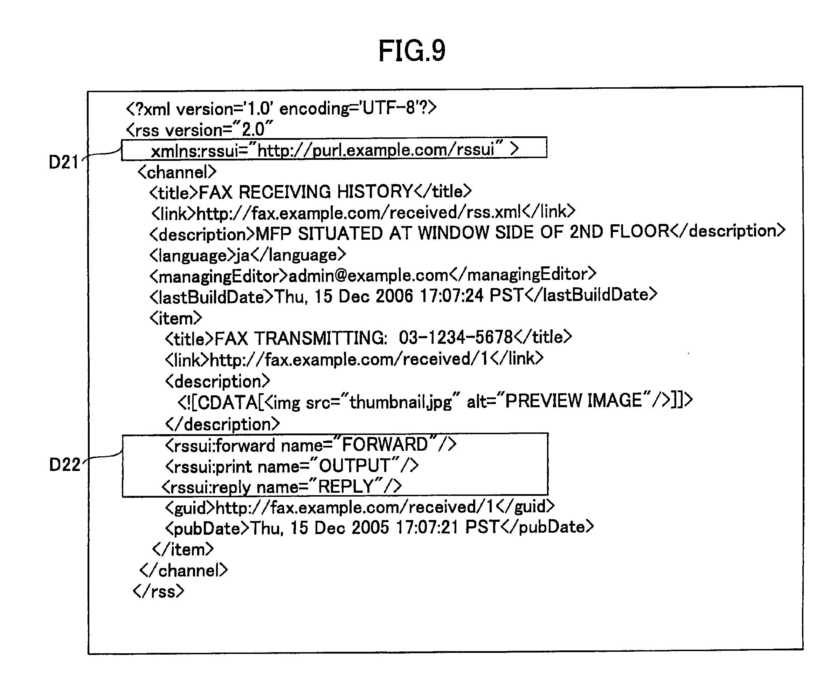

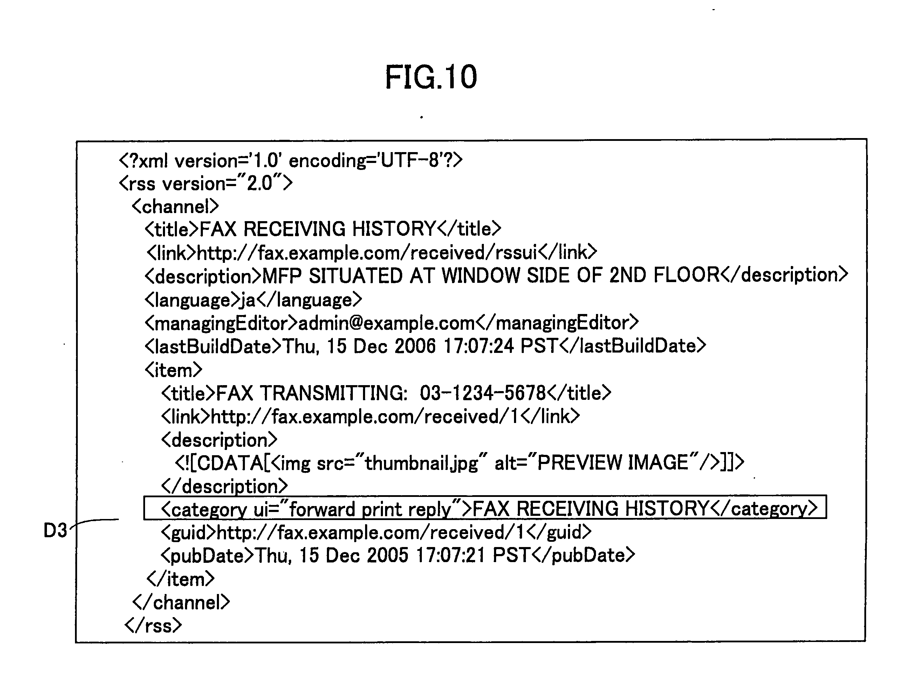

More specifically, FIG. 8 is with respect to display of the output button, the forwarding button and the reply button by description D1 formed by a form element and an input element. FIG. 9 is with respect to display of the output button, the forwarding button and the reply button by making UI "rssui" defined by the description D21 of the name space appear by using the description D22. FIG. 10 is with respect to display of the output button, the forwarding button and the reply button by making UI "ui="forward_print reply"" by using the description D3 of the category element.

The generated RSS feed is returned as a response from the FAX device 1 having the RSS delivery function to the client. FIG. 7(d) shows an example of the response. As shown in FIG. 7(d), an RSS feed of the XML format following the header part "HTTP/1.1 200 OK Content-Type: application/xml" is included.

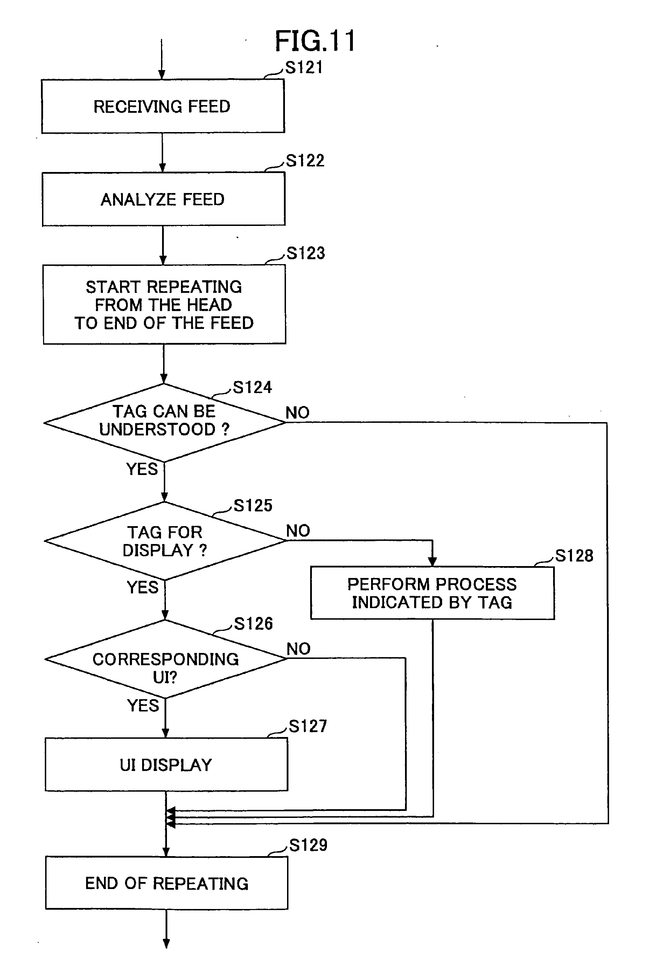

FIG. 11 is a flowchart showing a process example of the UI display at the client 3.

As shown in FIG. 11, the UI display part 33 of the client 3 receives the RSS feed in step S121 and analyzes the RSS feed in step S122.

Next, a repeating process starts from a head to an end of the RSS feed in step S123.

In the repeating process, it is determined whether the tag included in the RSS can be understood in step S124. If the tag can be understood (YES in step S124), it is determined whether the tag is a tag for display in step S125.

If the tag is the tag for display (YES in step S125), it is determined whether there is corresponding UI in step S126. If there is the corresponding UI (YES in step S126), the UI display is performed in step S127.

If the tag cannot be understood (NO in step S124), the process goes to the next repeating process.

If the tag is not a tag for display (NO in step S125), a process indicated by the tag is performed in step S128 so that the process goes to the next repeating process.

If there is no corresponding UI (NO in step S126), the process goes to the next repeating process.

In a case where the process goes to the end of the RSS feed (step S129), the process is completed.

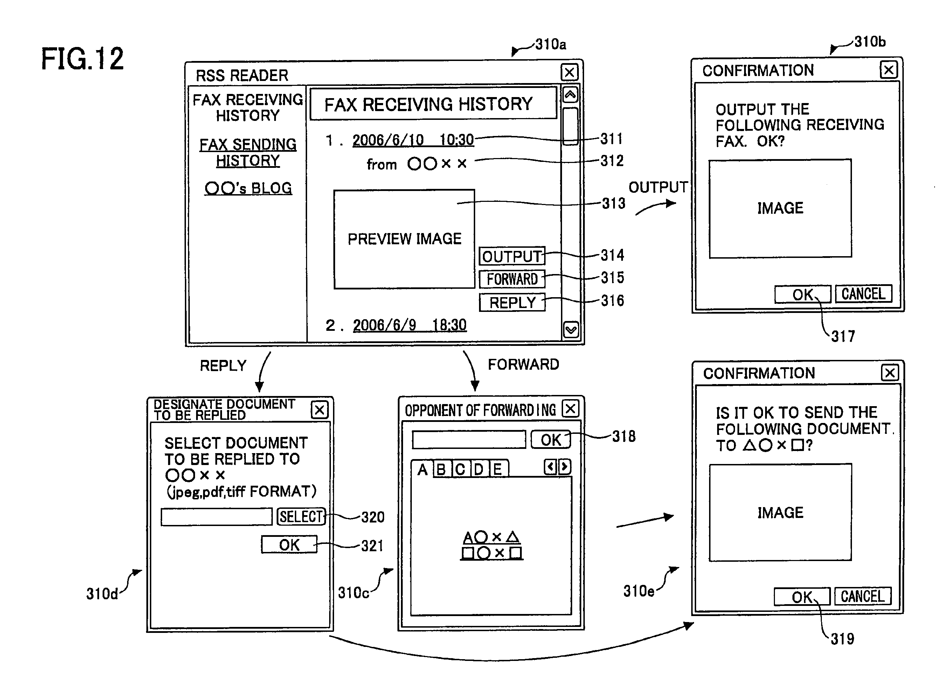

FIG. 12 is a first view showing display examples of an RSS reader by RSS feed having the UI. More specifically, FIG. 12 shows an example where outputting (printing) and forwarding can be performed from the FAX receiving history.

As shown in FIG. 12, the RSS reader display 310a is displayed based on the RSS feed having the UI obtained by requiring the RSS obtaining from the client 3 to the FAX device 1 having the RSS delivery function.

In the RSS reader display 310a, information such as a receiving date and time 311, a sender 312, and a preview image 313 is displayed for every receiving case (items). In addition, an output button 314, a forward button 315, and a reply button 316 are displayed as embedded UIs in the RSS reader display 310a.

In an example of the RSS shown in FIG. 8, the output button 314, the forwarding button 315 and the reply button 316 are displayed by description D1 formed by the form element and the input element. In an example of the RSS shown in FIG. 9, the output button 314, the forwarding button 315 and the reply button 316 are displayed by making UI "rssui" defined by the description D21 of the name space appear by using the description D22. In an example of the RSS shown in FIG. 10, the output button 314, the forwarding button 315 and the reply button 316 are displayed by making UI "ui="forward_print reply"" by using the description D3 of the category element.

Referring back to FIG. 12, a confirmation display 310b is displayed by selecting (clicking) the output button 314 of the RSS reader display 310a. Confirmation is made by selecting the OK button 317 at the confirmation display 310b so that printing is performed.

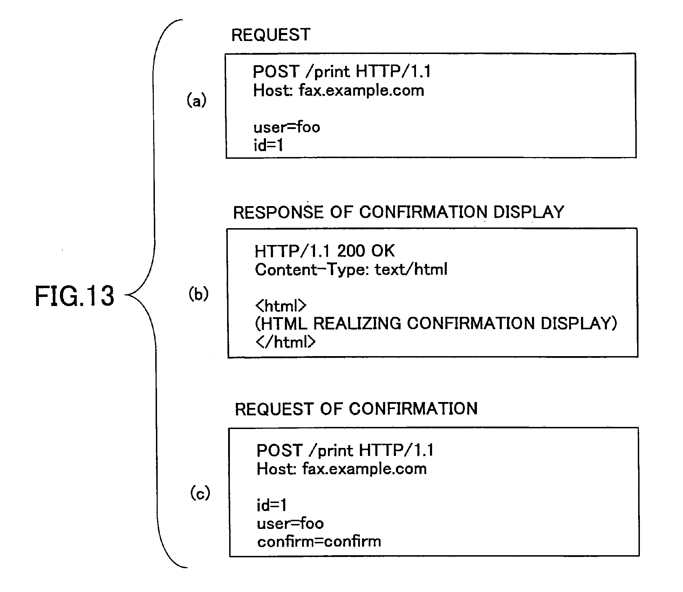

FIG. 13 is a view showing an example of a request and response made from selection of the output button 314 to selection of the OK button 317.

By selecting the output button 314 of the RSS reader display 310a, the request shown in FIG. 13(a) is transmitted from the client 3 to the FAX device 1 having the RSS delivery function, and the response including the HTML of the confirmation display 310b shown in FIG. 13(b) is transmitted from the FAX device 1 having the RSS delivery function.

In addition, by selecting the OK button 317 of the RSS reader display 310a, the request shown in FIG. 13(c) is transmitted from the client 3 to the FAX device 1 having the RSS delivery function.

Referring back to FIG. 12, an information input display 310c of an opponent for forwarding is displayed by selecting the forwarding button 315 of the RSS reader display 310a. The opponent for forwarding is elected from an address book and properly input at the information input display 310c. The OK button 318 is selected to display a confirmation display 310e. Confirmation is made by selecting the OK button 319 at the confirmation display 310e so that forwarding is performed.

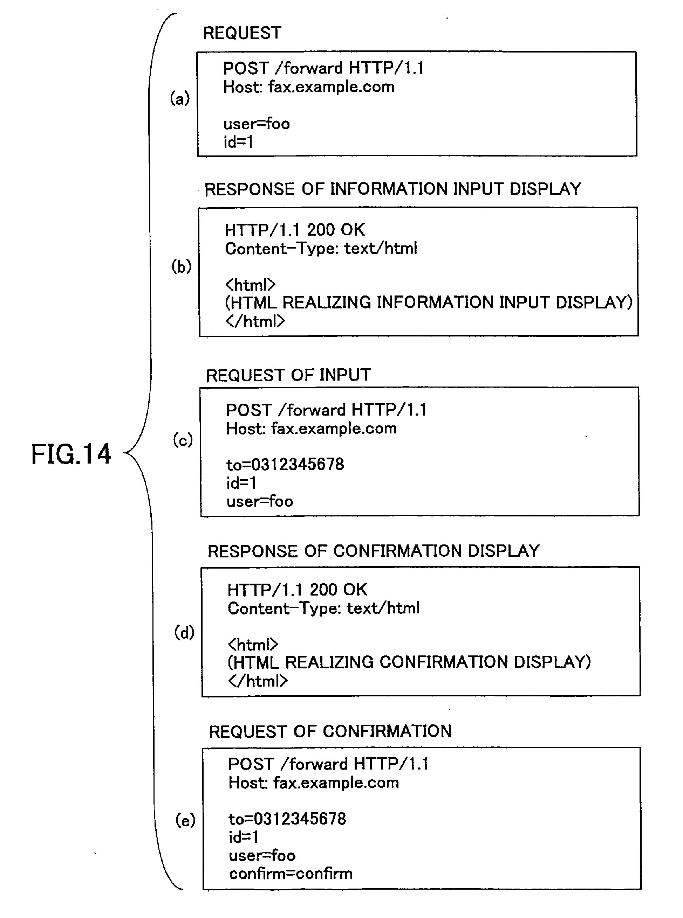

FIG. 14 is a view showing an example of a request and a response made from selection of the forwarding button 315 to selection of the OK button 319.

By selecting the forward button 315 of the RSS reader display 310a, the request shown in FIG. 14(a) is transmitted from the client 3 to the FAX device 1 having the RSS delivery function, and the response including the HTML of the confirmation display 310c shown in FIG. 14(b) is transmitted from the FAX device 1 having the RSS delivery function.

In addition, by inputting the opponent for forwarding to the information input display 310c and selecting the OK button 318, the request including information of the opponent for forwarding or the like shown in FIG. 14(c) is transmitted from the client 3 to the FAX device 1 having the RSS delivery function. Furthermore, the response including the HTML of the confirmation display 310e shown in FIG. 14(d) is transmitted from the FAX device 1 having the RSS delivery function.

Furthermore, by selecting the OK button 319 of the confirmation display 310e, the request shown in FIG. 14(e) is transmitted from the client 3 to the FAX device 1 having the RSS delivery function.

Referring back to FIG. 12, a file selecting display 310d for designating a document to be transmitted is displayed by selecting the reply button 316 of the RSS reader display 310a.

The document of the reply is properly selected by the file selecting display 310d (the file name is directly input or selected from the file list by the selecting button 320). The OK button 321 is selected so that the confirmation display 310e is displayed. Confirmation is made by selecting the OK button 319 at the confirmation display 310e so that the reply is sent.

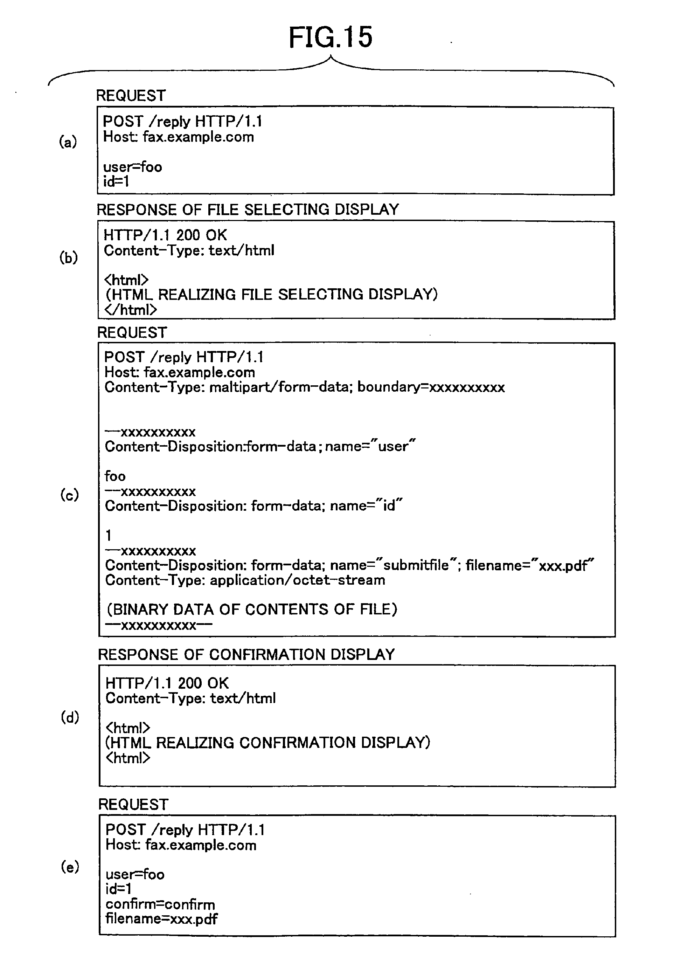

FIG. 15 is a view showing an example of the request and response made from selection of a reply button 316 to selection of the OK button 319.

By selecting the reply button 316 of the RSS reader display 310a, the request shown in FIG. 15(a) is transmitted from the client 3 to the FAX device 1 having the RSS delivery function, and response including the HTML of the file selecting display 310d shown in FIG. 15(b) is transmitted from the FAX device 1 having the RSS delivery function.

In addition, by selecting the document of the reply and selecting the OK button 318 at the file selecting display 310d, the request including information of the document of the reply shown in FIG. 15(c) is transmitted from the client 3 to the FAX device 1 having the RSS delivery function. Furthermore, the response including the HTML of the confirmation display 310e shown in FIG. 15(d) is transmitted from the FAX device 1 having the RSS delivery function.

Furthermore, by selecting the OK button 319 of the confirmation display 310e, the request shown in FIG. 15(e) is transmitted from the client 3 to the FAX device 1 having the RSS delivery function.

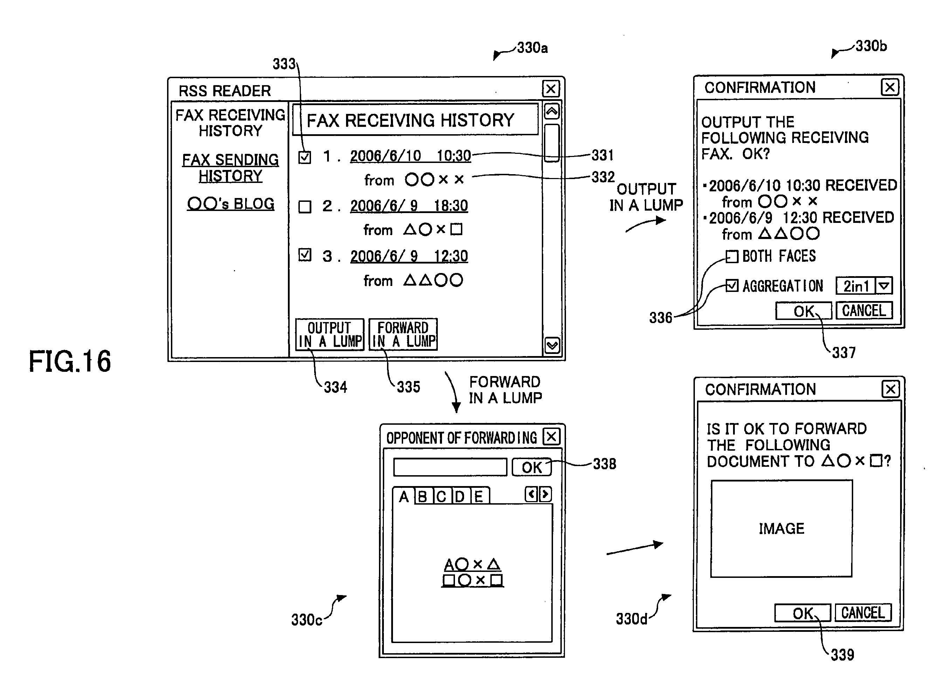

FIG. 16 is a second view showing display examples of an RSS reader by RSS feed having the UI.

As shown in FIG. 16, the RSS reader display 330a is displayed based on the RSS feed having the UI obtained by requiring the RSS to be obtained from the client 3 to the FAX device 1 having the RSS delivery function.

In the RSS reader display 330a, the receiving date and time 331 and a sender 332 are displayed for every received case (items). In addition, a check box 333 for selecting the item is provided in the RSS reader display 330a. Furthermore, a button 334 for outputting in a lump (together) and a button 335 for forwarding in a lump are provided in the RSS reader display 330a.

By selecting the check box 333 of the desirable items from the RSS reader display 330a and selecting the button 334 for outputting in a lump, the confirmation screen 330b is displayed.

By properly selecting the check box 336 for setting either both faces or an aggregation in the confirmation display 330b and selecting the OK button 337, the confirmation is made so that printing is performed in a lump.

In addition, an information input display 330c of an opponent for forwarding is displayed by selecting the button 335 for forwarding in a lump of the RSS reader display 330a. The opponent for forwarding is selected from an address book and properly input at the information input display 330c. The OK button 338 is selected so that a confirmation display 330d is displayed. Confirmation is made by selecting the OK button 339 at the confirmation display 330d so that forwarding in a lump is performed.

The button for replying in a lump shown in FIG. 12 may be provided so that replying in a lump can be performed for selected plural received cases.

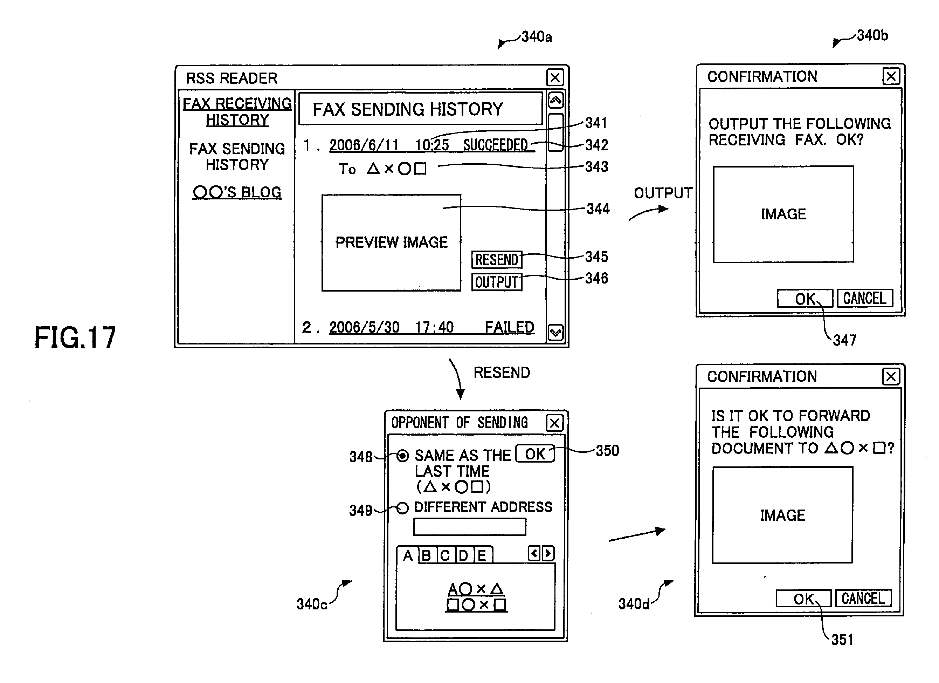

FIG. 17 is a third view showing display examples of an RSS reader by an RSS feed having the UI. More specifically, FIG. 17 shows an example for resending or outputting (printing) from a FAX transmitting history.

As shown in FIG. 17, the RSS reader display 340a is displayed based on the RSS feed having the UI obtained by requiring the RSS obtained from the client 3 sent to the FAX device 1 having the RSS delivery function.

In the RSS reader display 340a, the receiving date and time 341, the result of sending 342, the address 343, and a preview image 344 are displayed for every received cases (items). In addition, a resending button 345 and an output button 346 are displayed as embedded UIs in the RSS reader display 340a.

By selecting the output button 346 of the RSS reader display 340a, the confirmation display 340b is displayed. By selecting the OK button 347 in the confirmation display 340b, printing is confirmed and performed.

In addition, the information input screen 340c is displayed by selecting the resending button 345 of the RSS reader screen 340a. The opponent for resending is properly input at the information input screen 340c (the same as or different address from the address of last time is selected by a radio button 348 or 349 and address is selected from the address book in a case of the different address) and the OK button 350 is selected, so that the confirmation display 340d is displayed.

By selecting the OK button 351 at the confirmation display 340d, confirmation is made so that resending is performed.

Thus, according to the above-discussed FAX device 1 having the RSS delivery function, since the description of UI is included in the RSS, it is possible to perform operations such as outputting, forwarding or replying from a normal RSS reader or the like. Therefore, it is possible to further improve convenience.

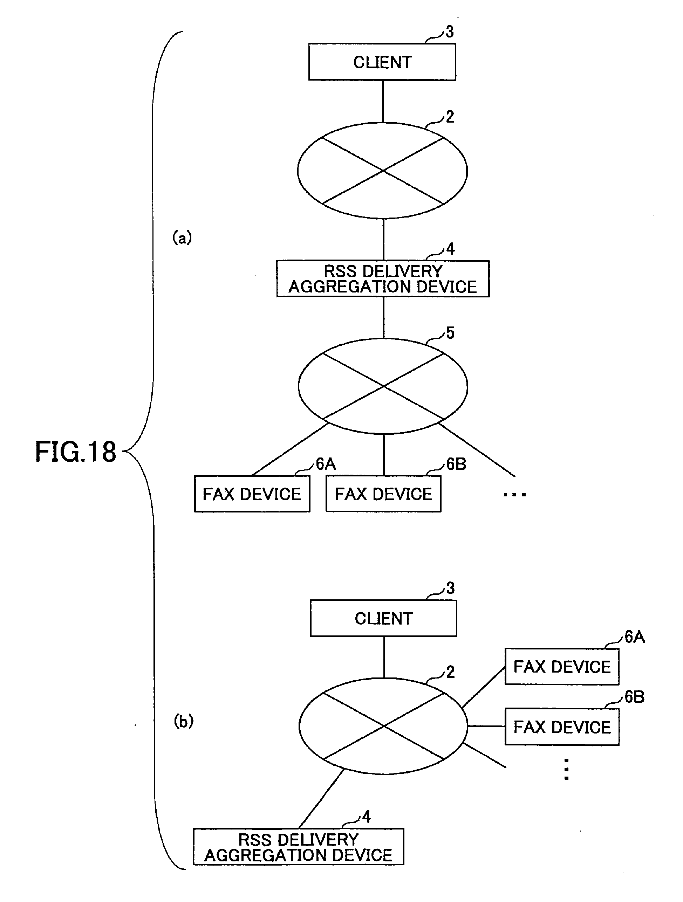

FIG. 18 is a view showing a structural example of another embodiment using an RSS delivery aggregation device.

The above-discussed embodiment of the present invention is applied to the FAX device 1 having the RSS delivery function. In the following embodiment of the present invention, a normal FAX regardless of having the RSS delivery function is used and the RSS is delivered by a concentrated RSS delivery aggregation device 4 based on information collected from plural FAX devices.

In an example shown in FIG. 18(a), information of plural FAX devices 6A, 6B, ... connected to a network 5 is collected by the RSS delivery aggregation device 4 connected to a network 5. Based on the request for obtaining the RSS from the client to the RSS delivery aggregation device 4 via the network 5, the RSS feed including the UI is delivered from the RSS delivery aggregation device 4.

In an example shown in FIG. 18(b), information of plural FAX devices 6A, 6B, ... connected to a common network 2 is collected by the RSS delivery aggregation device 4 connected to the same network 2. Based on a request for obtaining the RSS sent from the client to the RSS delivery aggregation device 4 via the network 5, the RSS feed including the UI is delivered from the RSS delivery aggregation device 4.

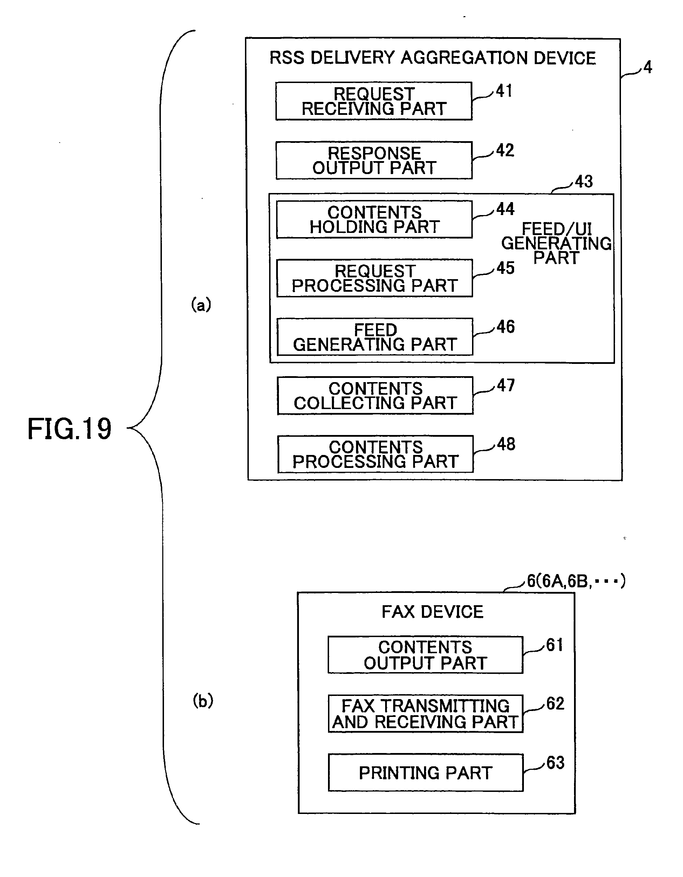

FIG. 19 is a view showing structural examples of the RSS delivery aggregation device 4 and the FAX device 6 (FAX device 6A, FAX device 6B, ...).

The RSS delivery aggregation device 4 shown in FIG. 19(a) includes a request receiving part 31, a response output part 42, a Feed/UI generating part 43, a contents collecting part 47, and a contents processing part 48.

The request receiving part 41 is configured to receive request from the client 3 via the network 2. The response output part 42 is configured to output a response by the HTTP to the request. The Feed/UI generating part 43 is configured to generate an RSS feed including the UI corresponding to the client 3 requesting to obtain the RSS.

The contents collecting part 47 is configured to collect the contents, such as a transmitting and receiving FAX image, a sender, an address, transmitting and receiving date and time, and FAX image ID, by the RSS feed from plural FAX devices 6A, 6B, .... The contents processing part 48 is configured to process the contents (convert the contents to the RSS format) by using an interface of the FAX devices 6A, 6b, ... so as to deliver the contents to the contents collecting part 47.

The Feed/UI generating part 43 includes a contents holding part 44, a request processing part 45, and a Feed generating part 46. The contents holding part 44 is configured to hold contents of FAX transmitting and receiving history. The request processing part 45 is configured to process the request from the client 3. The Feed generating part 46 is configured to generate the RSS feed.

As shown in FIG. 19(b), the FAX device 6 (6A, 6B, ...) includes a contents output part 61, a FAX transmitting and receiving part 62, and a printing part 63. The contents output part 61 is configured to output the contents by the RSS feed or the interface. The FAX transmitting and receiving part 62 is configured to transmit and receive FAX data to and from another FAX device or the like. The printing part 63 is configured to print a FAX received image.

With respect to operations, the same operations as those of the FAX device 1 having the RSS delivery function shown in FIG. 5 through FIG. 17 are implemented in this embodiment other than that the RSS delivery aggregation device 4 collects and holds the contents from the FAX device 6 (6A, 6B, ...).

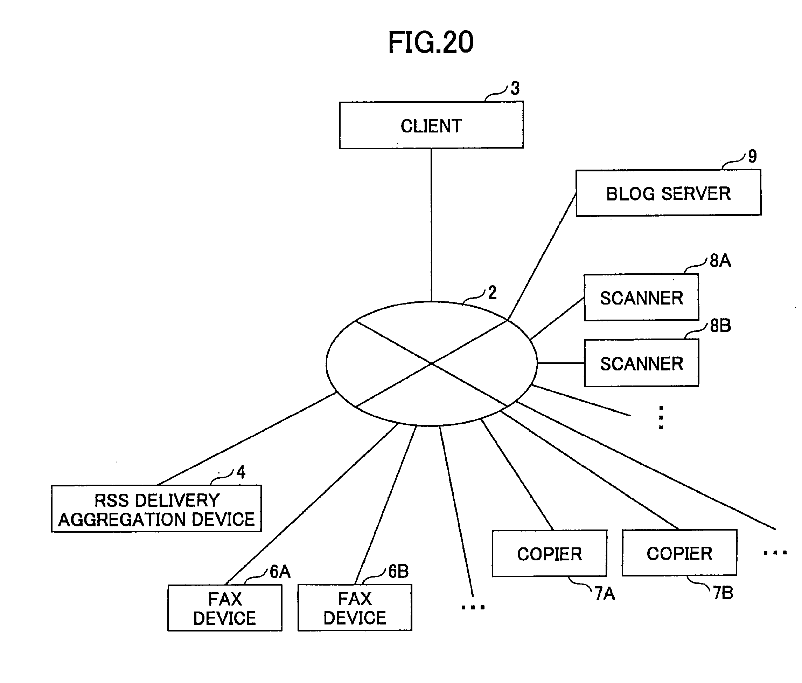

FIG. 20 is view showing a structural example of another embodiment using the RSS delivery aggregation device 4. In addition to the FAX devices 6A, 6B, ..., the copiers 7A, 7B, ..., handling the image contents and the scanners 8A, 8B, ..., and the blog server 9 are subjects of this example. The contents are collected from these devices by the RSS delivery aggregation device 4.

The RSS feed including the UI is delivered from the RSS delivery aggregation device 4 to the request for obtaining the RSS performed from the client 3 to the RSS delivery aggregation device 4 via the network 4. Functions for outputting own contents by the RSS feed or the interface are provided to the copiers 7A, 7B, ..., the scanners 8A, 8B, ..., and the blog server 9.

In this case, with respect to operations, the same operations as those of the FAX device 1 having the RSS delivery function shown in FIG. 5 through FIG. 17 are implemented in this embodiment other than that the RSS delivery aggregation device 4 collects and holds the contents from the FAX device 6 (6A, 6B, ...), the copiers 7A, 7B, ..., the scanners 8A, 8B, ..., and the blog server 9.

According to the above-discussed embodiments of the present invention, it is possible to provide a method for generating metadata, the metadata being described in a document language, the method including: a step of obtaining contents from a contents holding part, the contents including an image being a subject of the metadata; a step of analyzing a request for metadata delivery from an opponent for delivery via a network; a step of determining necessity for adding a user interface to a designated operation based on a result of analysis of the request for the metadata delivery; and a step of adding data to the metadata delivered to a requester via a network in a case where it is determined that adding the user interface to the designated operation is necessary, the data being for generating the user interface for the designated operation.

The necessity for adding the user interface to the designated operation may be determined based on a type of a client, a user ID or an IP address of the requester included in the request for the metadata delivery via the network.

The data for generating the user interface to be added may make a processing system of the client side, configured to interpret and display the metadata, display a confirmation display and start a designated process based on confirmation by the confirmation display.

The data for generating the user interface to be added may make a processing system of the client side, configured to interpret and display the metadata, display an input display, display a confirmation display based on completion of input to the input display, and start a designated process based on confirmation by the confirmation display.

The metadata may be an RSS, and the data for generating the user interface may be descriptions by a form element and an input element of XML or HTML.

The metadata may be an RSS, and the data for generating the user interface may be descriptions causing an appearance of a user interface defined by a name space.

The metadata may be an RSS, and the data for generating the user interface may be descriptions causing appearance of a user interface by a category element of HTML or XML.

According to the above-discussed embodiments of the present invention, it is also possible to provide an electronic device having a metadata delivery function, the function being for generating and delivering metadata described in a document language, the electronic device including: a part configured to obtain contents from a contents holding part, the contents including an image being a subject of the metadata; a part configured to analyze a request for metadata delivery from an opponent for delivery via a network; a part configured to determine necessity for adding a user interface to a designated operation based on a result of analysis of the request for the metadata delivery; and a part configured to add data to the metadata delivered to a requester via a network in a case where it is determined that adding the user interface to the designated operation is necessary, the data being for generating the user interface for the designated operation.

Thus, according to the above-discussed embodiments of the present invention, since description of data for generating the user interface is included in the metadata such as the RSS, it is possible to perform operations such as outputting, forwarding or replying from a normal RSS reader or the like. Therefore, it is possible to further improve convenience.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A method for generating metadata, the metadata being described in a document language, the method comprising:
a step of obtaining contents from a contents holding part, the contents including an image being a subject of the metadata;
a step of analyzing a request for metadata delivery from an opponent for delivery via a network;
a step of determining necessity for adding a user interface to a designated operation based on a result of analysis of the request for the metadata delivery; and
a step of adding data to the metadata delivered to a requester via a network in a case where it is determined that adding the user interface to the designated operation is necessary, the data being for generating the user interface for the designated operation.

2. A method for generating metadata according to claim 1,
wherein the necessity for adding the user interface to the designated operation is determined based on a type of a client, a user ID or an IP address of the requester included in the request for the metadata delivery via the network.

3. A method for generating metadata according to claim 1,
wherein the data for generating the user interface to be added makes a processing system of the client side, configured to interpret and display the metadata, display a confirmation display and start a designated process based on confirmation by the confirmation display.

4. A method for generating metadata according to claim 1,
wherein the data for generating the user interface to be added makes a processing system of the client side, configured to interpret and display the metadata, display an input display, display a confirmation display based on completion of input to the input display, and start a designated process based on confirmation by the confirmation display.

5. A method for generating metadata according to claim 1,
wherein the metadata are an RSS, and
the data for generating the user interface are descriptions by a form element and an input element of XML or HTML.

6. A method for generating metadata according to claim 1,
wherein the metadata are an RSS, and
the data for generating the user interface are descriptions causing an appearance of a user interface defined by a name space.

7. A method for generating metadata according to claim 1,
wherein the metadata are an RSS, and
the data for generating the user interface are descriptions causing appearance of a user interface by a category element of HTML or XML.

8. An electronic device having a metadata delivery function, the function being for generating and delivering metadata described in a document language, the electronic device comprising:
a part configured to obtain contents from a contents holding part, the contents including an image being a subject of the metadata;
a part configured to analyze a request for metadata delivery from an opponent for delivery via a network;
a part configured to determine necessity for adding a user interface to a designated operation based on a result of analysis of the request for the metadata delivery; and
a part configured to add data to the metadata delivered to a requester via a network in a case where it is determined that adding the user interface to the designated operation is necessary, the data being for generating the user interface for the designated operation.

9. An electronic device having a metadata delivery function according to claim 8,
wherein the necessity for adding the user interface to the designated operation is determined based on a type of a client, a user ID or an IP addr ess of the requester included in the request for the metadata delivery via the network.

10. An electronic device having a metadata delivery function according to claim 8,
wherein the data for generating the user interface to be added makes a processing system of the client side, configured to interpret and display the metadata, display a confirmation display and start a designated process based on confirmation by the confirmation display.

11. An electronic device having a metadata delivery function according to claim 8,
wherein the data for generating the user interface to be added makes a processing system of the client side, configured to interpret and display the metadata, display an input display, display a confirmation display based on completion of input to the input display, and start a designated process based on confirmation by the confirmation display.

12. An electronic device having a metadata delivery function according to claim 8,
wherein the metadata are an RSS, and
the data for generating the user interface are descriptions by a form element and an input element of XML or HTML.

13. An electronic device having a metadata delivery function according to claim 8,
wherein the metadata are an RSS, and
the data for generating the user interface are descriptions causing an appearance of a user interface defined by a name space.

14. An electronic device having a metadata delivery function according to claim 8,
wherein the metadata are an RSS, and
the data for generating the user interface are descriptions causing appearance of a user interface by a category element of HTML or XML.
